# EUROPEAN PATENT APPLICATION

(11) **EP 2 887 297 A1**
(43) Date of publication of application: **24.06.2015**
(21) Application number: 14199820.3
(22) Date of filing: 22.12.2014
(51) Int. Cl.: G06Q 30/02, H04N 21/2668, H04N 21/431

(54) **Method and device for providing targeted content**

(30) Priority: 23.12.2013 EP 13306848
(71) Applicant: Thomson Licensing, 92130 Issy-les-Moulineaux (FR)
(72) Inventor: Onno, Stéphane, 35576 CESSON-SEVIGNE (FR); Le Scouarnec, Nicolas, 35576 CESSON-SEVIGNE (FR); Neumann, Christoph, 35576 CESSON-SEVIGNE (FR); Straub, Gilles, 35576 CESSON-SEVIGNE (FR)
(74) Representative: Huchet, Anne

(57) **Abstract**

It is provided a method for providing content for a video. The method includes steps of receiving, from a client device, a message comprising a first content identifier uniquely identifying a first piece of content for the video and a first relevancy score associated with the first piece of content, wherein the first piece of content and the first relevancy score are determined based on a user identifier that identifies a user and a video identifier that identifies the video; determining a second piece of content and a second relevancy score associated with the second piece of content based on the user identifier, the video identifier and playback context parameter including at least one of geographical location, device type and time; and if it is determined that the second relevancy score divided by computation cost for inlaying the second piece of content into the video is larger than the first relevancy score divided by computation cost for inlaying the first piece of content into the video, using the second piece of content for the video.

## Description

### TECHNICAL FIELD

The present invention relates to data processing, and more particularly relates to a method and a device for providing targeted content.

### BACKGROUND

Streaming media are multimedia that are constantly received by and presented to an end-user while being delivered by a media provider. Streaming media are usually transmitted over HTTP protocol. There are several HPPT-based media streaming communication protocols. Among those protocols, HTTP Live Streaming (also known as HLS) is implemented by Apple Inc. as part of their QuickTime and iOS software. It works by breaking the overall stream into a sequence of small HTTP-based file downloads, each download loading one short chunk of an overall transport stream. As the stream is played, the client may select from a number of different alternate streams containing the same material or content encoded at a variety of data rates, allowing the streaming session to adapt to the available data rate. At the start of the streaming session, it downloads an extended M3U (m3u8) playlist containing the metadata for the various sub-streams which are available. Herein, a playlist is a list of entries or identifiers specifying locations of one or more multimedia files. An entry or an identifier uniquely specifies a local pathname (either absolute pathname or relative pathname), e.g. "C:\My Music\newsong.mp3" and can specify a web address or URL (uniform resource locator), e.g. "http://www.mysong.com/mysong.avi".

Based on media streaming technologies, Video on demand (VOD) or audio and video on demand (AVOD) systems can be built. The systems allow users to select and watch /listen to video or audio content on demand on the Internet. In order to generate revenue, a service provider adds or embeds advertisement into requested content.

It is desired to have a method for providing targeting advertisement content.

### SUMMARY

According to an aspect of the present invention, it is provided a method for providing content for a video. The method includes steps of receiving, from a client device, a message comprising a first content identifier uniquely identifying a first piece of content for the video and a first relevancy score associated with the first piece of content, wherein the first piece of content and the first relevancy score are determined based on a user identifier that identifies a user and a video identifier that identifies the video; determining a second piece of content and a second relevancy score associated with the second piece of content based on the user identifier, the video identifier and playback context parameter including at least one of geographical location, device type and time; and if it is determined that the second relevancy score divided by computation cost for inlaying the second piece of content into the video is larger than the first relevancy score divided by computation cost for inlaying the first piece of content into the video, using the second piece of content for the video.

According to a variant, it further comprises a step of determining relevancy scores of the first piece of content and the second piece of content to the video as the first score and the second score.

According to a variant, it further comprises steps of determining relevancy scores of the first piece of content and the second piece of content to the video; and weighting the relevancy scores of the first piece of content and the second piece of content with computation costs for the first piece of content and the second piece of content so as to get the first score and the second score.

According to a variant, the message is in the form of URL, it further comprises a step of modifying the URL by replacing the first content identifier with a second content identifier that uniquely identifies the second piece of content so as to redirect the client device to consume the second piece of content.

According to another aspect of the present invention, it is provided a device for providing content for a video. The device comprises a network interface for receiving, from a client device, a message comprising a first content identifier identifying a first piece of content for the video and a first relevancy score associated with the first piece of content, wherein the first piece of content and the first relevancy score are determined based on a user identifier that identifies a user and a video identifier that identifies the video; and a processor for determining a second piece of content and a second relevancy score associated with the second piece of content based on the user identifier, the video identifier and playback context parameter including at least one of geographical location, device type and time; and it is determined that the second relevancy score divided by computation cost for inlaying the second piece of content into the video is larger than the first relevancy score divided by computation cost for inlaying the first piece of content into the video, using the second piece of advertisement for the video.

According to a variant, the CPU is further used for determining relevancy scores of the first piece of content and the second piece of content to the video as the first score and the second score.

According to a variant, the CPU is further used for determining relevancy scores of the first piece of content and the second piece of content to the video; and weighting the relevancy scores of the first piece of content and the second piece of content with computation costs for the first piece of content and the second piece of content so as to get the first score and the second score.

According to a variant, the message is in the form of URL, the CPU is further used for modifying the URL by replacing the first content identifier with a second content identifier that uniquely identifies the second piece of content so as to redirect the client device to consume the second piece of content.

A computer program product comprising program code instructions to execute the steps of the method according to any of the embodiments and variants is disclosed when this program is executed on a computer.

A processor readable medium having stored therein instructions for causing a processor to perform at least the steps of the encoding method according to any of the embodiments and variants is disclosed.

It is to be understood that more aspects and advantages of the invention will be found in the following detailed description of the present invention.

### BRIEF DESCRIPTION OF THE DRAWINGS

The accompanying drawings, which are included to provide a further understanding of the invention and are incorporated in and constitute a part of this application, will be used to illustrate an embodiment of the invention, as explained by the description. The invention is not limited to the embodiment.

In the drawings:
Fig. 1 is a diagram showing a system for providing targeted content according to an embodiment of the present invention;
Fig. 2 is diagram showing an original image of a movie and an image with advertisement inlaid according to the embodiment of the present invention; and
Fig. 3 is a diagram showing the hardware structure according to the embodiment of the present invention.

### DETAILED DESCRIPTION

The embodiment of the present invention will now be described in detail in conjunction with the drawings. In the following description, some detailed descriptions of known functions and configurations may be omitted for clarity and conciseness.

According to an embodiment of the present invention, the principle of the present invention is used to improve a following system, in which insertion of at least one piece of targeted advertisement is decided once and fixed for a requested video content. In some systems, e.g. HTTP based media streaming system, a client device may request for, get and store a playlist from a server and in a later time the content is played by running the playlist on the client device requesting for the playlist or a different device that receives the playlist from the client device. But in the traditional system the playback is not bound to a given playback time and does not make use of information about the client environment. The present embodiment provides a situation where information about the client environment is used to dynamically adapt the advertisement content to be played (one or more piece of advertisement content among all pieces of advertisement content associated with the requested video content). According to the embodiment of the present invention, in response to a request for a video content, e.g. a movie from a user, a server generates a playlist or a file including identifiers specifying both the movie and one or more pieces of recommended advertisement; the user can store the playlist and use the playlist to play back the movie in a later time on the client device requesting for the playlist or a different client device. Herein, the advertisement as well as its score (e.g. relevance score) are decided twice separately when the user sends the request for the movie and when the user uses the playlist to play back the movie, wherein the user environment or playback context (e.g. geographical location) is taken into account for deciding the advertisement when the user uses the playlist to play back the movie. Besides, if two pieces of corresponding recommended advertisement decided at above two time points are different and the score of the advertisement decided at the time of requesting to play back is much larger than the score decided at the time of requesting for the movie, the advertisement decided at the time of requesting to play back is used as the advertisement during the play back.

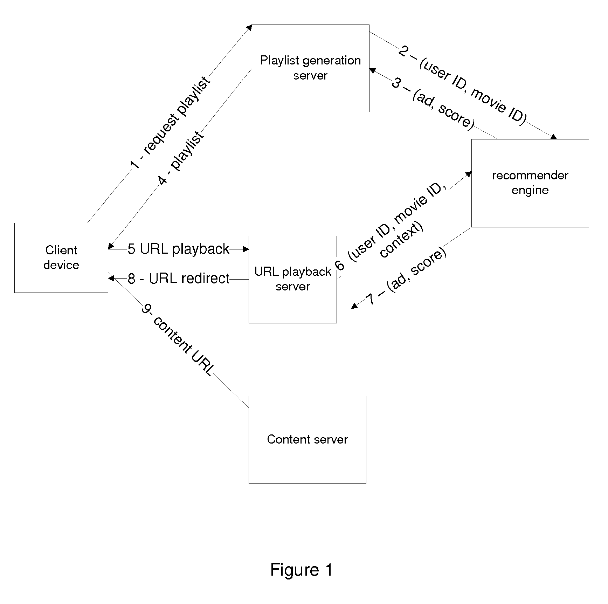

Fig. 1 is a diagram showing a system for providing targeted content according to the embodiment of the present invention. The system comprises a client device, a playlist generation server, a URL playback server, a content server and a recommender engine. It shall note that all entities are listed in terms of their functionalities. In actual implementation, the playlist generation server, the URL playback server, the content server and the recommender engine can be implemented in one or more physical device, e.g. they are all implemented in a physical device, or the playlist generation server, the URL playback server and the content server are implemented in a physical device and the recommender engine is implemented in another physical device.

In the above system, a multi-level ad-selection method requests at least twice for a same set of parameters (user_id, content_id), and determines whether the latter determined advertisement is more relevant and suitable to play than the former one. Besides, the method takes into account of additional playback context parameters (such as the client's geographical localization) that may have changed compared to that at the time of the first advertisement selection. According to a variant, because advertisement inlay process, advertisement overlay insertion process (e.g. used for logo insertion), or other types of advertisement approach (e.g. switching to some pre-computed video part) incurs cost, the method further weights latter ad-decision with the cost it incurs (e.g. to compute for inlay advertisement into the movie in some advertising methods), and use the latter one to play if it is beneficial compared to the first ad-selection.

Further, the computation cost may be different at the playlist generation time and at the playback time for reasons below. It is one of motivations to enable this two-level recommendation mechanism because the computation cost is hard to predict at the playlist generation time: 1) batch processing: any server can process different ads in a batch queue for example, if the server is in an idle state; 2) low cost compute instance: one way to spent less money on buying instance is to bid a price on unused cloud provider capacity. However, we cannot be sure that this instance will be available. Therefore, if such instance is being used instead of one of the normal price, the computation cost decreases. 3) cache operation: a score may take into account that the computed ad is available at the playlist generation time, thus computation cost is low. At the playback time, a cache algorithm decided to delete the computed ad, thus the score changes since the ad must be recomputed (computation cost increases).

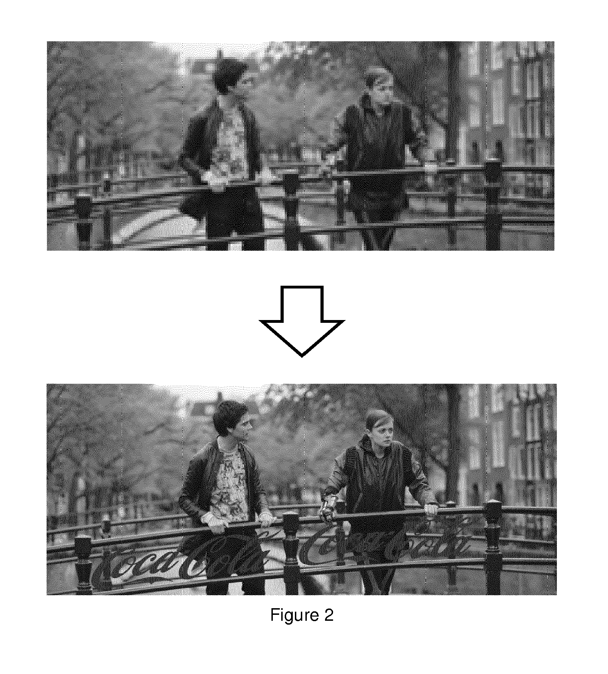

An example that is put into a framework where advertisement is inlaid into the movie is shown below. In other words, the advertisement is placed on the placeholder of at least one image of the movie. Fig. 2 is diagram showing an original image of a movie (upper image) and an image with advertisement inlaid (lower image). Herein, a placeholder is a region in the image for holding additional information, e.g. text, image etc. As can be seen from the Fig. 2, the placeholder holds an image advertisement for Coca Cola. Compared to other kinds of advertisement methods, e.g. the advertisement content is played before the play of the movie or is played inter-images of the movie, the inlay advertisement method incurs a lot of computation in terms of image processing.

Turning back to Fig. 1, the first level of advertisement determination (steps 1 to 4) occurs at playlist generation time. The user chooses a movie when connecting to a portal. And consequently, the client device sends a request for the movie including a user identifier (user ID) that uniquely identifies the user (in a variant embodiment, a device identifier that uniquely identifies the client device is used) and a movie identifier (movie ID) that uniquely identifies the chosen movie. In response to the request for the movie from the client device, the playlist generation server makes a request including the user ID and the movie ID to the recommender engine. The recommender engine computes the (user ID, movie ID) input and returns a 2-tuple parameters (ad, score) back to the playlist generation server. The ad parameter identifies a suggested advertisement. The score parameter indicates relevancy of the suggested advertisement to the movie. For example, the score is a 'prediction' score (see "Item-Based Collaborative Filtering Recommendation": Badrul Sarwar, George Karypis, Joseph Konstan, John Riedl, WWW 2010) or a rank or quality score of adauction systems (see "Truthful auctions for pricing search keywords": Gagan Aggarwal, Ashish Goel, Rajeev Motwani, Proceedings of the 7th ACM conference on Electronic commerce - EC '06, 2006, and "Internet advertising and the generalized second price auction: Selling billions of dollars worth of keywords": B Edelman, Michael Ostrovsky, Michael Schwarz, NBER Working Paper No. 11765, 2005). In the step 4, the playlist generation server computes a URL from this 2-tuple (ad, score). The resulting URL contains at least the information (ad, score, user_id) (optionally, the resulting URL may be encrypted), i.e. the advertisement and its score are encoded and carried in the resulting URL. The playlist generation server repeats this operation to generate a URL for each returned 2-tuple from the recommender engine. After processing all returned 2-tuples, the playlist generation server generates a playlist including all the generated URLs and sends the playlist back to the client within the HTTP GET response. The steps 1 to 4 allows to predict early in time the chunks of content (i.e. portions of the movie with advertisement inlaid) that will be served, so as to anticipate and inlay the advertisement into the movie at a low cost using low cost computing resources.

The second level of advertisement determination (steps 5 to 8) occurs at playing time. In order to play the requested movie, the client device sends URLs in the playlist one after another to the URL playback server. The URL playback server obtains the user ID, the movie ID, playback context and the previously calculated advertisement and its score. For example, the movie ID and the playback context are obtained in a way that they are sent together with the URL (or before the transmission of the URL) from the client device to the URL playback server. And the user ID, previously calculated advertisement and its score are obtained from the URL. Similarly as before, the playback server calls the recommender engine and gets back a possibly different advertisement and a new score. If advertisements generated by the different recommendations steps 3 and 7 are different, and the score of the latter advertisement is significantly higher than the former one (e.g. bigger than a predetermined threshold value or threshold percentage), the playback server modifies original URL to replace original advertisement and original score with the new advertisement and new score or generates a new URL from the newly returned 2-tuple, and redirecting the request to the client device so that the client device is redirected to consume the new advertisement. If the difference in score is not significant, the original URL is kept and not substituted because computing a new chunk (i.e. inlaying the new advertisement into the movie) urgently is costly and it does not bring significant improvements in the advertisement targeting. According to a variant, other than sending information about the playback context in a separate message, the URL generated at the playlist requesting time is modified or complemented with playback context. The complemented URL sent by the client must be well understood and decoded by the URL playback server. It can be based on a predefined URL semantic generated by the client or depending on placeholders generated at the playlist requesting time but filled by the client device at the playback time. An example is shown below:
(http:..movie/ads/{score}/{playback context}/{playlist date}/{last ad seen})

Besides, in order to implement the above method, the client device is able to capture playback context and to replace fields of the URL before sending the URLs to the URL playback server. According to another embodiment, the client connects to a local HTTPS proxy which replaces the fields of the URL on behalf of the client device (e.g. local squid which cooperates with the client to get the HTTPS traffic).

In a variant embodiment, other than using URLs in the steps 4, 5 and 8, messages with same parameters as the URLs are used.

Further, a variant embodiment consists in having the client device report the playback context in HTTP headers rather than modifying the URL.

In the above embodiment, all placeholders in the movie are used to present the same advertisement. In a variant embodiment, each placeholder is associated with meta data describing scene context. So for each placeholder, a 2-tuple (ad, score) is determined at the steps 3 and 7. And consequently, in the steps 2 and 6, parameter about meta data of the placeholder is also sent, and the meta data is also considered when determining the advertisement in the recommender engine.

In the above embodiment, the geographical location is used to represent playback context. It shall note the playback context is not limited to the geographical location, and other kinds of information may also be taken into account, for example, device type, time etc. For example, an advertisement for a tea brand recommended at 5 pm would not be recommended at 8 pm when a pizza advertisement suits better; a promotion advertisement (i.e. pizza) determined at the playlist requesting time may expire at the playback time.

In a variant embodiment, the score returned by the recommender engine/ad-auction is weighted with the cost (cloud compute cost) necessary to generate the corresponding targeted chunk (i.e. computation for inlaying the advertisement into the portion of the movie). In general the cost of the second recommendation is higher: at the playback time the system has less time to generate the corresponding chunk and thus requires more cloud-compute power. A simple quality score/predication score would ignore this behavior, which may end up in situations where the system systematically takes only the second recommendation into account and consequently significantly increases the cloud-cost. In this variant the system divides the score returned by the recommender engine/ad-auction with the cloud-compute cost: weighted_score = score / cloud_cost. The resulting weighted score is included in the URL of the chunk. Doing so allows to compare the cost of the two recommendations: second_score / second_cost >? first_score / first_cost. So the system uses the advertisement with higher weighted score.

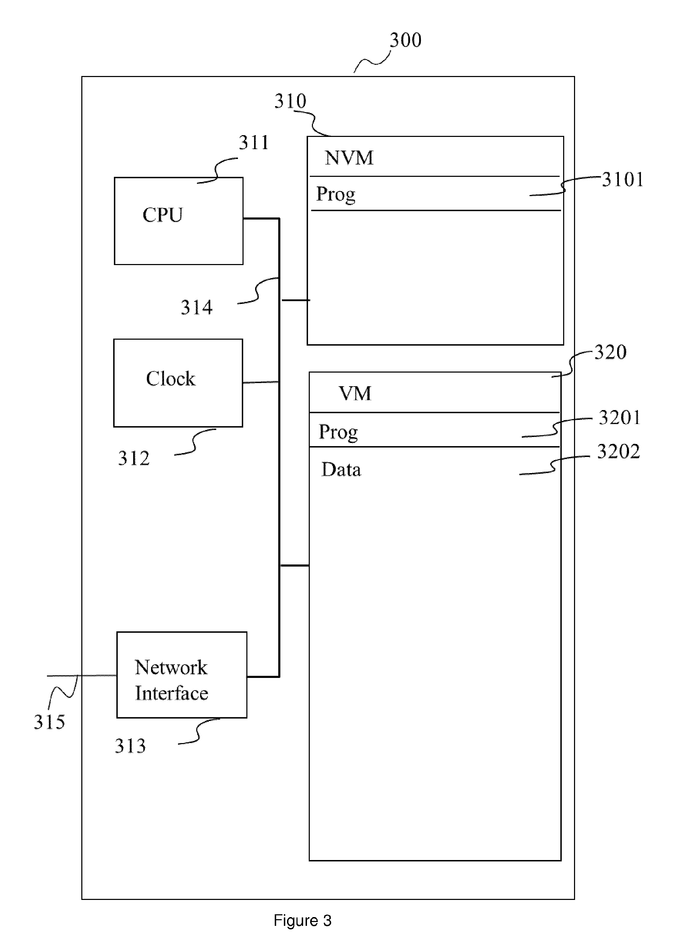

Fig. 3 is a diagram showing the hardware structure of a device that is used to implement any one of the client device, the playlist generation server, the URL playback server, the content server and the recommender engine according to the embodiment of the present invention. The device 300 comprises the following components, interconnected by a digital data- and address bus 314:
- a processing unit 311 (or CPU for Central Processing Unit);
- a non-volatile memory NVM 310 ;
- a volatile memory VM 320 ;
- a clock unit 312, providing a reference clock signal for synchronization of operations between the components of the device 300 and for other timing purposes;
- a network interface 313, for interconnection of device 300 to other devices connected in a network via connection 315.

It is noted that the word "register" used in the description of memories 310 and 320 designates in each of the mentioned memories, a low-capacity memory zone capable of storing some binary data, as well as a high-capacity memory zone, capable of storing an executable program, or a whole data set.

Processing unit 311 can be implemented as a microprocessor, a custom chip, a dedicated (micro-) controller, and so on. Non-volatile memory NVM 310 can be implemented in any form of non-volatile memory, such as a hard disk, non-volatile random-access memory, EPROM (Erasable Programmable ROM), and so on. The Non-volatile memory NVM 310 comprises notably a register 3201 that holds a program representing an executable program comprising the method according to the invention. When powered up, the processing unit 311 loads the instructions comprised in NVM register 3101, copies them to VM register 3201, and executes them.

The VM memory 320 comprises notably:
- a register 3201 comprising a copy of the program 'prog' of NVM register 3101 ;
- a register 3202 comprising read/write data that is used during the execution of the method of the invention, such as the user profile.

In this embodiment, the network interface 313 is used to implement the different transmitter and receiver functions of the receiver device.

According to a particular embodiment, all entities in the Fig. 1 comprise dedicated hardware for implementing the different functions that are provided by the steps of the method. According a variant embodiment of the server and the receiver devices according to the invention, these entities are implemented using generic hardware such as a personal computer. According to yet another embodiment of the server and the receiver devices according to the invention, these devices are implemented through a mix of generic hardware and dedicated hardware. According to particular embodiments, the server and the receiver device are implemented in software running on a generic hardware device, or implemented as a mix of soft- and hardware modules.

Other device architectures than illustrated by figure 3 are possible and compatible with the method of the invention. Notably, according to variant embodiments, the invention is implemented as a mix of hardware and software, or as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example as a dedicated electronic card in a computer, each of the means implemented in hardware, software or a mix of these, in same or different soft- or hardware modules.

Specifically, as to the client device, its CPU 1) uses the network interface to send request and receive response, 2) uses the NVM to store the received playlist and 3) decodes data specified by the URL so as to present the content to the user.

As to the playlist generation server, its CPU 1) uses the network interface to receive the request for playlist from the client device, send request with parameters of user ID and movie ID to the recommender engine, receive a response including two parameters indicating the advertisement and its score and send a generated playlist to the client device, 2) obtains the user ID and the movie ID from the client device and 3) generates the playlist based on the received response.

As to the recommender engine, its CPU 1) uses the network interface to receive the request from the playlist generation server, send the response including two parameters indicating the advertisement and its score to the playlist generation server, receive a request with parameters of the user ID, the movie ID and the playback context from the URL playback server and send a response with two parameters indicating the advertisement and its score to the URL playback server, 2) determines the advertisement and its score based on the user ID and the movie ID conveyed in the request sent from the playlist generation server by using a first determination algorithm and determines the advertisement and its score based on the user ID, the movie ID and the playback context conveyed in the request sent from the URL playback server by using a second determination algorithm.

As to the URL playback server, its CPU 1) uses the network interface to receive a URL from the client device, wherein, for example the URL comprises parameters indicating the user ID, the movie ID, one or more pieces of advertisement, their corresponding scores and playback context, 2) uses the network interface to send a request with parameters of user ID, the movie ID and the playback context to the recommender engine, 3) uses the network interface to receive a response with parameters indicating one or more pieces of advertisement and their scores from the recommender engine, 4) determines whether or not the received scores from the recommender engine are larger than the scored conveyed in the URL with a predefined value or by a predefined percentage value, 5) if the determination is positive, modifies the URL to replace the original advertisement and scores with the ones in the response from the recommender engine; and if negative, does not modify the URL, and 6) uses the network interface to send the modified URL to the client device so as to redirect the client device to consume the new advertisement. According to a variant embodiment, the CPU weights the scores with computation cost for generating the advertisement, and compares the weighted scores for deciding which advertisement is going to be used.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the invention as defined by the appended claims.

## Claims

1. A method for providing content for a video, **characterized by** comprising:
- receiving, from a client device, a message comprising a first content identifier uniquely identifying a first piece of content for the video and a first relevancy score associated with the first piece of content, wherein the first piece of content and the first relevancy score are determined based on a user identifier that identifies a user and a video identifier that identifies the video;
- determining a second piece of content and a second relevancy score associated with the second piece of content based on the user identifier, the video identifier and playback context parameter including at least one of geographical location, device type and time; and
if it is determined that the second relevancy score divided by computation cost for inlaying the second piece of content into the video is larger than the first relevancy score divided by computation cost for inlaying the first piece of content into the video, using the second piece of content for the video.

2. The method of the claim 1, wherein further comprising
receiving, from the client device, a request for the video, wherein the request comprises the user identifier and the video identifier.

3. The method of the claim 1, wherein the message is in the form of URL, the method further comprising
modifying the URL by replacing the first content identifier with a second content identifier so as to redirect the client device to consume the second piece of content.

4. The method of the claim 1, wherein the first piece of content and the second piece of content comprise advertisement.

5. A device for providing content for a video, **characterized by** comprising
a network interface for receiving, from a client device, a message comprising a first content identifier identifying a first piece of content for the video and a first relevancy score associated with the first piece of content, wherein the first piece of content and the first relevancy score are determined based on a user identifier that identifies a user and a video identifier that identifies the video; and
a processor for determining a second piece of content and a second relevancy score associated with the second piece of content based on the user identifier, the video identifier and playback context parameter including at least one of geographical location, device type and time; and if it is determined that the second relevancy score divided by computation cost for inlaying the second piece of content into the video is larger than the first relevancy score divided by computation cost for inlaying the first piece of content into the video, using the second piece of advertisement for the video.

6. The device of the claim 5, wherein the network interface is further used for receiving, from the client device, a request for the video, wherein the request comprises the user identifier and the video identifier; and the processor is further used for determining the first piece of content based on the user identifier and the video identifier.

7. The device of the claim 5, **characterized in that** the message is in the form of URL, the processor is further used for modifying the URL by replacing the first content identifier with a second content identifier so as to redirect the client device to consume the second piece of content.

8. The device of the claim 5, wherein the first piece of content and the second piece of content comprise advertisement.

9. Computer program product downloadable from a communications network and/or stored in a computer-readable carrier and/or executable by a microprocessor, **characterized in that** it comprises program code instructions for the execution of the method for providing targeted content according to at least one of the claims 1 to 4, when it is executed on a computer.

10. Non-transitory computer-readable medium comprising a computer program product recorded thereon and capable of being run by a processor, including program code instructions for implementing the steps of a method according to at least one of claims 1 to 4.
